# FASCICULE DE BREVET EUROPEEN

(11) **EP 3 194 218 B1**
(45) Date de publication et mention de la délivrance du brevet: **10.10.2018**
(21) Numéro de dépôt: 15763313.2
(22) Date de dépôt: 11.09.2015
(51) Int. Cl.: B60R 25/021

(54) **ANTIVOL POUR VEHICULE AUTOMOBILE**
DIEBSTAHLSCHUTZVORRICHTUNG FÜR EIN KRAFTFAHRZEUG
ANTI-THEFT DEVICE FOR A MOTOR VEHICLE

(30) Priorité: 17.09.2014 FR 1458787
(43) Date de publication de la demande: 26.07.2017
(73) Titulaire: U-Shin France, 94000 Créteil (FR)
(72) Inventeur: JULIEN, Renaud, F-94046 Creteil Cedex (FR); PERRIN, Christophe, F-94046 Creteil Cedex (FR)
(74) Mandataire: Gaillarde, Frédéric F. Ch.
(86) Numéro de dépôt international: PCT/EP2015/070887
(87) Numéro de publication internationale: WO 2016/041879

(56) Documents cités:
- WO-A2-2006/047521
- DE-A1- 4 307 339
- FR-A1- 2 748 513
- FR-A1- 2 805 231
- US-A- 6 003 349

## Description

### DOMAINE TECHNIQUE

La présente invention concerne un antivol pour véhicule automobile.

### ARRIÈRE-PLAN TECHNOLOGIQUE

Pour éviter le vol d'un véhicule automobile lorsque ce dernier est démarré sans utiliser de clé légitime, il est connu d'utiliser un antivol pour un véhicule automobile du type comportant :
- un barillet destiné à être tourné par un insert de clé,
- un pêne destiné à prendre une position de verrouillage d'une colonne de direction du véhicule automobile et une position de déverrouillage de la colonne de direction,
- une première chaîne cinématique entre le barillet et le pêne telle qu'une rotation du barillet déplace le pêne de sa position de verrouillage à sa position de déverrouillage,
- une seconde chaîne cinématique entre le barillet et un dispositif de détection de la position angulaire du barillet.

La première chaîne cinématique comporte généralement une came rotative entraînée par le barillet, un suiveur poussé par la came rotative, et une tirette entraînée par le suiveur et destinée à déplacer le pêne vers sa position de déverrouillage.

Il peut arriver que le pêne reste coincé dans la colonne de direction et manière à rester bloquer en position de verrouillage. Dans ce cas, le conducteur peut être tenté de forcer la rotation du barillet en appliquant un couple important sur la clé, qui retransmet ce couple au barillet. Or, le suiveur est généralement une pièce simple et peut résistante, de sorte qu'il risque de céder si le couple appliqué au barillet est élevé, notamment s'i ce couple dépasse 8 Nm. Si le suiveur cède, l'utilisateur est alors libre de démarrer le véhicule, alors que la colonne de direction est toujours verrouillée par le pêne. Cette situation pose un très important problème de sécurité pour le conducteur.

Le document WO 2006/047521 A2 divulgue un tel antivol pour véhicule automobile.

L'invention a pour but de palier au moins en partie ce problème de sécurité.

### RÉSUMÉ DE L'INVENTION

À cet effet, il est proposé un antivol du type précité, caractérisé en ce qu'il comporte une liaison fusible, commune aux première et seconde chaînes cinématiques et présentant un seuil de rupture qui est le plus faible des liaisons de la première chaîne cinématique, de sorte que la liaison fusible soit la première de la première chaîne cinématique à céder en cas de blocage du pêne en position de verrouillage.

Grâce à l'invention, comme la liaison fusible est commune aux deux chaînes cinématiques, la rotation du barillet n'est plus détectée par le dispositif de détection suite à la rupture de cette liaison fusible. Ainsi, le barillet « tourne dans le vide » et ne peut pas commander le démarrage du véhicule automobile.

De façon optionnelle, la liaison fusible est destinée à céder lorsqu'un couple défini est inférieur à la rupture du suiveur, notamment supérieur à 4,5 Nm, notamment 5 Nm, est appliqué au barillet.

De façon optionnelle également, l'antivol comporte en outre une came, et la liaison fusible lie le barillet à la came.

De façon optionnelle également, la came est une came rotative, et le barillet et la came rotative sont montés mobiles en rotation autour d'un même axe de rotation.

De façon optionnelle également, la liaison fusible rend le barillet et la came rotative solidaires en rotation autour de l'axe de rotation.

De façon optionnelle également, le barillet présente au moins un doigt d'entraînement de la came rotative de sorte qu'une rotation du barillet entraîne une rotation de la came rotative, et le ou les doigts d'entraînement sont fusibles.

De façon optionnelle également, le ou les doigts d'entraînement sont destinés à céder lorsque le couple entre le barillet et la came rotative est inférieur à la rupture du suiveur, notamment supérieur à 4,5 Nm, voire supérieure à 5 Nm.

### DESCRIPTION DES FIGURES

Des modes de réalisation de l'invention vont à présent être décrits à titre d'exemple uniquement, en référence aux figures suivantes.
La figure 1 est une vue en trois dimension d'un antivol selon l'invention pour véhicule automobile.
La figure 2 est une vue en trois dimension d'une extrémité avant d'un barillet de l'antivol de la figure1.
La figure 3 est un diagramme illustrant les liaisons entre les pièces de l'antivol de la figure 1.

### DESCRIPTION DÉTAILLÉE

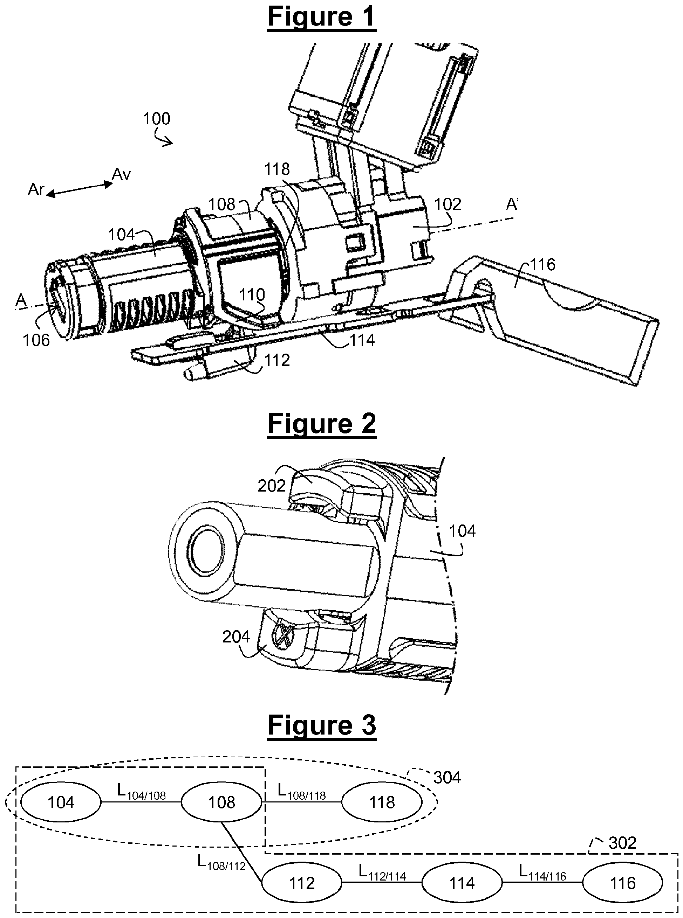

En référence aux figures 1 à 3, un antivol 100 selon l'invention pour véhicule automobile va à présent être décrit. L'antivol 100 est destiné à commander le verrouillage d'une colonne de direction du véhicule automobile et le démarrage d'un moteur de ce véhicule automobile.

En référence à la figure 1, l'antivol 100 comporte tout d'abord un bâti 102.

L'antivol 100 comporte en outre un barillet 104 monté tournant par rapport au bâti 102 autour d'un axe de rotation AA' parallèle à une direction avant/arrière Av-Ar. Le barillet 104 est entouré d'une partie arrière du bâti 102, qui n'est pas représentée par soucis de clarté. Le barillet 104 est muni à l'arrière d'une fente 106 d'introduction d'une clé (non représentée).

Le barillet 104 reçoit des paillettes (non représentées) de détection de la clé. Ainsi, lorsque la clé est compatible avec le barillet 104, les paillettes sont destinées à se désengager de la partie arrière du bâti 102 de sorte que le barillet 104 puisse tourner autour de l'axe AA'. Au contraire, si la clé n'est pas compatible avec le barillet 104 ou bien en l'absence de clé, les paillettes sont destinées à rester engagées dans la partie arrière du bâti 102 de sorte que le barillet 104 soit bloqué en rotation par rapport au bâti 102.

Le barillet 104 est destiné à être tourné par la rotation de la clé depuis une première position STOP jusqu'à une deuxième position MARCHE, puis jusqu'à une troisième position DEMARRAGE.

L'antivol 100 comporte en outre une came rotative 108 située à l'avant du barillet 104 et montée tournante autour de l'axe de rotation AA' par rapport au bâti 102. La came rotative 108 présente une rampe 110 définissant un profil de came.

L'antivol 100 comporte en outre un suiveur 112 destiné à coopérer avec la rampe 110 de la came rotative 108 pour se déplacer le long de la direction avant/arrière.

L'antivol 100 comporte en outre une tirette 114 liée au suiveur 112 de manière à être déplacé par le suiveur 112 le long de la direction avant/arrière.

L'antivol 100 comporte en outre un pêne 116 lié à une extrémité avant de la tirette 114 de manière à être déplacé par la tirette 114 entre une position de verrouillage de la colonne de direction (non représentée) et une position de déverrouillage de la colonne de direction.

L'antivol 100 comporte en outre un système d'alimentation électrique (non représenté) comportant un dispositif 118 de détection de la position angulaire du barillet 104. Le système d'alimentation électrique est destiné à alimenter ou non électriquement des organes électriques du véhicule automobile en fonction de la position du barillet 104 détectée par le dispositif de détection 118. Plus précisément, lorsque le barillet 104 est dans sa position STOP, le système d'alimentation électrique n'alimente pas les organes électriques. Lorsque le barillet 104 est dans sa deuxième MARCHE, le système d'alimentation électrique alimente les organes électriques. Lorsque le barillet 104 est dans sa position DEMARRAGE, le système d'alimentation électrique alimente un démarreur du véhicule automobile.

En référence à la figure 2, le barillet 104 est muni d'au moins un doigt d'entraînement 202, 204 de la came rotative 108. Ainsi, dans l'exemple décrit, le barillet 104 et la came rotative 108 sont solidaires en rotation l'un de l'autre. Chaque doigt d'entraînement 202, 204 se projette axialement depuis une face avant du barillet 104 et est destiné à transmettre un couple entre le barillet 104 et la came rotative 108.

En référence à la figure 3, il sera apprécié que l'antivol 100 présente deux chaînes cinématiques 302, 304.

Une première chaîne cinématique 302 s'étend entre le barillet 104 et le pêne 116. La première chaîne cinématique 302 comporte les liaisons suivantes :
- une liaison barillet 104 / came rotative 108, référencée L_{104/108},
- une liaison came rotative 108 / suiveur 112, référencée L_{108/112},
- une liaison suiveur 112 / tirette 114, référencée L_{112/114},
- une liaison tirette 114, pêne 116, référencée L_{114/116}.

Grâce à la première chaîne cinématique 302, une rotation du barillet 104 de sa position STOP à sa position MARCHE déplace le pêne 116 de sa position de verrouillage à sa position de déverrouillage. En outre, une rotation du barillet 104 de sa position MARCHE à sa position STOP déplace le pêne 116 de sa position de déverrouillage à sa position de verrouillage.

La seconde chaîne cinématique 304 s'étend entre le barillet 104 et le dispositif 118 de détection de la position angulaire du barillet 104. La seconde chaîne cinématique 304 comporte les liaisons suivantes :
- une liaison barillet 104 / came rotative 108, référencée L_{104/108},
- une liaison came rotative 108/ dispositif de détection 118, référencée L_{108/118}.

Grâce à la seconde chaîne cinématique 304, la position angulaire du barillet 104 est détectée par le dispositif de détection 118.

Il sera apprécié que la liaison L_{104/108} entre le barillet 104 et la came rotative 108 est commune aux première et seconde chaînes cinématiques 302, 304. En outre, cette liaison présente un seuil de rupture qui est le plus faible des liaisons de la première chaîne cinématique 302, de sorte que la liaison L_{104/108} soit la première de la première chaîne cinématique 302 à céder en cas de blocage du pêne 116 en position de verrouillage.

Dans l'exemple décrit, la liaison L_{104/108} est destinée à céder lorsque un couple défini est inférieur à la rupture du suiveur, notamment supérieur à 4,5 Nm, voire 5 Nm, est appliqué au barillet 104, alors que la came rotative 118 est bloquée en rotation, en particulier suite au blocage du pêne 116.

Ceci est réalisé en concevant le ou les doigts d'entraînement 202, 204 de manière à ce qu'ils soient fusibles. Dans l'exemple décrit, les doigts d'entraînement 202, 204 sont conçus pour céder lorsque le couple entre le barillet 104 et la came rotative 108 est inférieur à la rupture du suiveur, notamment supérieur à 4,5 Nm, voire 5 Nm.

La présente invention n'est pas limitée aux modes de réalisation décrits précédemment, mais est au contraire définie par les revendications qui suivent. Il sera en effet apparent à l'homme du métier que des modifications peuvent y être apportées.

En particulier, le dispositif de détection pourrait être lié directement au barillet, sans passer par l'intermédiaire de la came rotative. Cela présente un intérêt lorsque la came rotative n'est pas tout le temps solidaire en rotation du barillet. Dans ce cas, la liaison fusible pourrait être la liaison entre le barillet et le dispositif de détection.

Par ailleurs, les termes utilisés dans les revendications ne doivent pas être compris comme limités aux éléments des modes de réalisation décrits précédemment, mais doivent au contraire être compris comme couvrant tous les éléments équivalents que l'homme du métier peut déduire à partir de ses connaissances générales.

## Revendications

1. Antivol (100) pour un véhicule automobile comportant :
- un barillet (104) destiné à être tourné par un insert de clé,
- un pêne (116) destiné à prendre une position de verrouillage d'une colonne de direction du véhicule automobile et une position de déverrouillage de la colonne de direction,
- une première chaîne cinématique (302) entre le barillet (104) et le pêne (116) telle qu'une rotation du barillet (104) déplace le pêne (116) de sa position de verrouillage à sa position de déverrouillage,
- une seconde chaîne cinématique (304) entre le barillet (104) et un dispositif (118) de détection de la position angulaire du barillet (104),
l'antivol (100) étant **caractérisé en ce qu'**il comporte une liaison fusible (L_{104/108}), commune aux première et seconde chaînes cinématiques (302, 304) et présentant un seuil de rupture qui est le plus faible des liaisons de la première chaîne cinématique (302), de sorte que la liaison fusible (L_{104/108}) soit la première de la première chaîne cinématique (302) à céder en cas de blocage du pêne (118) en position de verrouillage lorsque ledit seuil de rupture est franchi.

2. Antivol (100) selon la revendication 1, dans lequel la liaison fusible (L_{104/108}) est destinée à céder lorsqu'un couple supérieur à 4,5 Nm est appliqué au barillet (104).

3. Antivol (100) selon la revendication 1 ou 2, comportant en outre une came (108), et dans lequel la liaison fusible (L_{104/108}) lie le barillet (104) à la came (108).

4. Antivol (100) selon la revendication 3, dans lequel la came (108) est une came rotative, dans lequel le barillet (104) et la came rotative (108) sont montés mobiles en rotation autour d'un même axe de rotation (AA').

5. Antivol (100) selon la revendication 4, dans lequel la liaison fusible (L_{104/108}) rend le barillet (104) et la came rotative (108) solidaires en rotation autour de l'axe de rotation (AA').

6. Antivol (100) selon la revendication 4 ou 5, dans lequel le barillet (104) présente au moins un doigt (202, 204) d'entraînement de la came rotative (118) de sorte qu'une rotation du barillet (104) entraîne une rotation de la came rotative (118), et dans lequel le ou les doigts d'entraînement (202, 204) sont fusibles.

7. Antivol (100) selon la revendication 6, dans lequel le ou les doigts d'entraînement (202, 204) sont destinés à céder lorsque le couple entre le barillet (104) et la came rotative (108) est supérieur à 4,5 Nm.

## Patentansprüche

1. Diebstahlschutzvorrichtung (100) für ein Kraftfahrzeug, umfassend:
- einen Schließzylinder (104), der dazu bestimmt ist, durch das Einsetzen eines Schlüssels gedreht zu werden,
- einen Riegel (116), der dazu bestimmt ist, eine Position zum Sperren einer Lenksäule des Kraftfahrzeugs und eine Position zum Entsperren der Lenksäule einzunehmen,
- eine erste kinematische Kette (302) zwischen dem Schließzylinder (104) und dem Riegel (116), sodass eine Drehung des Schließzylinders (104) den Riegel (116) von dessen Position zum Sperren in dessen Position zum Entsperren bewegt,
- eine zweite kinematische Kette (304) zwischen dem Schließzylinder (104) und einer Vorrichtung (118) zum Erkennen der Winkelposition des Schließzylinders (104),
wobei die Diebstahlschutzvorrichtung (100) **dadurch gekennzeichnet ist, dass** sie eine schmelzbare Verbindung (L_{104/108}) umfasst, die der ersten und zweiten kinematischen Kette (302, 304) gemein ist und eine Bruchgrenze aufweist, die die Schwächste der Verbindungen der ersten kinematischen Kette (302) ist, sodass die schmelzbare Verbindung (L_{104/108}) die Erste der ersten kinematischen Kette (302) ist, die im Fall einer Blockade des Riegels (118) in der Position zum Sperren nachgibt, wenn die Bruchgrenze überschritten wird.

2. Diebstahlschutzvorrichtung (100) nach Anspruch 1, wobei die schmelzbare Verbindung (L_{104/108}) dazu bestimmt ist nachzugeben, wenn ein Drehmoment, das größer als 4,5 Nm ist, auf den Schließzylinder (104) angewendet wird.

3. Diebstahlschutzvorrichtung (100) nach Anspruch 1 oder 2, weiterhin umfassend einen Nocken (108), und wobei die schmelzbare Verbindung (L_{104/108}) den Schließzylinder (104) mit dem Nocken (108) verbindet.

4. Diebstahlschutzvorrichtung (100) nach Anspruch 3, wobei der Nocken (108) ein drehbarer Nocken ist, wobei der Schließzylinder (104) und der drehbare Nocken (108) drehbeweglich um eine gleiche Drehachse (AA') angebracht sind.

5. Diebstahlschutzvorrichtung (100) nach Anspruch 4, wobei die schmelzbare Verbindung (L_{104/108}) den Schließzylinder (104) und den drehbaren Nocken (108) um die Drehachse (AA') drehfest macht.

6. Diebstahlschutzvorrichtung (100) nach Anspruch 4 oder 5, wobei der Schließzylinder (104) mindestens einen Mitnehmer (202, 204) des drehbaren Nockens (118) aufweist, sodass eine Drehung des Schließzylinders (104) eine Drehung des drehbaren Nockens (118) bewirkt, und wobei der oder die Mitnehmer (202, 204) schmelzbar sind.

7. Diebstahlschutzvorrichtung (100) nach Anspruch 6, wobei der oder die Mitnehmer (202, 204) dazu bestimmt sind nachzugeben, wenn das Drehmoment zwischen dem Schließzylinder (104) und dem drehbaren Nocken (108) größer als 4,5 Nm ist.

## Claims

1. An anti-theft device (100) for a motor vehicle including:
- a barrel (104) intended to be rotated by a key insert,
- a bolt (116) intended to take a locking position of a steering column of the motor vehicle and an unlocking position of the steering column;
- a first kinematic chain (302) between the barrel (104) and the bolt (116) so as a rotation of the barrel (104) moves the bolt (116) from its locking position to its unlocking position,
- a second kinematic chain (304) between the barrel (104) and a device (118) for detecting the angular position of the barrel (104),
the antitheft device (100) being **characterized in that** it includes a fusible link (L_{104/108}) common to the first and second kinematic chains (302, 304) and having a breakdown threshold which is the weakest of the links of the first kinematic chain (302), so that the fusible link (L_{104/108}) is the first of the first kinematic chain (302) to break in case the bolt (118) is blocked in the locking position when said breakdown threshold is crossed.

2. The anti-theft device (100) according to claim 1, wherein the fuse link (L_{104/108}) is intended to break when a torque greater than 4.5 Nm is applied to the barrel (104).

3. The anti-theft device (100) according to claim 1 or 2, further including a cam (108), and wherein the fusible link (L_{104/108}) links the barrel (104) to the cam (108).

4. The anti-theft (100) according to claim 3, wherein the cam (108) is a rotating cam, wherein the barrel (104) and the rotating cam (108) are movably mounted in rotation about the same axis of rotation (AA').

5. The anti-theft device (100) according to claim 4, wherein the fuse link (L_{104/108}) makes the barrel (104) and the rotating cam (108) secured in rotation about the axis of rotation (AA').

6. The anti-theft device (100) according to claim 4 or 5, wherein the barrel (104) has at least one finger (202, 204) for driving the rotating cam (118) so that a rotation of the barrel (104) causes a rotation of the rotating cam (118), and wherein the drive finger(s) (202, 204) is/are fusible.

7. The anti-theft device (100) according to claim 6, wherein the drive finger(s) (202, 204) is/are intended to break when the torque between the barrel (104) and the rotating cam (108) is greater than 4.5 Nm.
